# EUROPEAN PATENT SPECIFICATION

(11) **EP 3 174 693 B1**
(45) Date of publication and mention of the grant of the patent: **08.11.2017**
(21) Application number: 15781764.4
(22) Date of filing: 23.07.2015
(51) Int. Cl.: B29C 67/00, B33Y 10/00, B33Y 30/00

(54) **STEREOLITHOGRAPHIC MACHINE WITH HIGH PRODUCTIVITY**
STEREOLITHOGRAFISCHE MASCHINE MIT HOHER PRODUKTIVITÄT
MACHINE DE STÉRÉOLITHOGRAPHIE PRÉSENTANT UNE PRODUCTIVITÉ ÉLEVÉE

(30) Priority: 23.07.2014 IT VI20140195
(43) Date of publication of application: 07.06.2017
(73) Proprietor: Sisma S.p.A., 36013 Piovene Rocchette (Vicenza) (IT)
(72) Inventor: BAZZUCCO, Fabiano, 36016 Thiene (VI) (IT)
(74) Representative: Lissandrini, Marco
(86) International application number: PCT/IT2015/000189
(87) International publication number: WO 2016/013038

(56) References cited:
- DE-A1-102010 020 158
- DE-A1-102012 021 284
- JP-A- H08 207 144

## Description

The present invention relates to a stereolithographic machine with high productivity.

In particular, the present invention relates to a stereolithographic machine for producing three-dimensional objects, which is particularly suitable for making industrial prototypes.

Therefore, the invention is in the field of stereolithographic machines.

Nowadays, the stereolithography technique allows to realize three-dimensional objects by overlapping one another a plurality of layers realized by means of a liquid resin which is able to solidify under the action of a predetermined stimulation.

Each layer of the object is obtained by selectively stimulating the resin so as to solidify it in prefixed points that make up a corresponding section of the object to be made.

As is known, a stereolithographic machine comprises a vessel for containing said liquid resin, provided with a transparent bottom.

It also has a light source, generally a laser emitter or a projector, able to selectively irradiate the layer of the liquid resin which is nearby the bottom of the container, so as to solidify said layer.

The machine also comprises a flat modeling head, suitable for supporting the solidified layers of the three-dimensional object, which is coupled with actuator means for moving it in a direction which is perpendicular to the bottom of the vessel.

A method of stereolithography, employing the above known machine, provides first of all to dispose the modeling head at a distance from the bottom of the vessel which is equal to the thickness of the layer to be solidified.

Therefore, in order to make the first layer of the object, the modeling head is brought to the level of the liquid layer to be stimulated, so that the first layer is formed close to the head and adheres to said head.

The layer of the liquid resin which is nearby the bottom of the vessel is then selectively irradiated by means of the light source to solidify it.

The modeling head is configured so that the solidified layer adheres to it while, on the contrary, the bottom of the vessel has a coating that reduces the adherence.

In order to make each subsequent layer, the modeling head is moved away from the bottom of the vessel, so as to bring out the solidified layer from the resin and thus allow the retrieval of the thickness of liquid resin required for processing a next layer of the object.

Afterwards, the head brings the object in a position so that the last layer is nearby the liquid layer of the resin and therefore said last layer is solidified adhering to the previous layer.

Examples of stereolithographic machines according to the state of the art are shown in documents DE102010020158 which discloses an apparatus according to the preamble of claim 1, and DE102012021284.

The known stereolithographic machines have the drawback that the working provides, after making each object, the detachment of the object from the modeling head. Said detachment should be done with caution and thus it requires time and attention.

After each single working, in order to proceed with making other three-dimensional objects, the known machines provide for the detachment of the finished object from the surface of the head, the cleaning of said head and the cleaning of the liquid resin, if necessary.

Therefore, after making each object, it is necessary to interrupt the processing until the operation of detachment of the finished parts from the working surface of the modeling head, which is carried out manually by an operator, is finished.

If several working surfaces are available, it is possible, after making a first object, replace a surface with another surface, but this operation is also awkward and causes unwanted production breaks, as well as the required attendance of an operator for a manual replacement of said surfaces.

The above drawbacks also increase the machining time, with obvious effects on the costs of each product.

The present invention aims to overcome the above drawbacks of the known art.

An aim of the present invention is to provide a stereolithographic machine which allows to optimize the production of three-dimensional objects, with respect to the known stereolithographic machines.

Within this aim, it is an object of the present invention to propose a stereolithographic machine that allows a reduction of working breaks and that is able to prevent the presence of a user for changing the working surface.

Another object of the present invention is to provide a stereolithographic machine that allows to produce three-dimensional objects, also according to different forms, with a single machine and continuosly, that is to say without having to interrupt the working after the production of each piece.

This aim, as well as the above objects and others which will become clear hereinafter, are achieved by a stereolithographic machine according to the appended claim 1.

Other detailed features are included in the dependent claims.

Advantageously, the stereolithographic machine according to the invention has a modeling head with multiple working surfaces, which is able to rotate at 360°; this allows to optimize the production and to reduce the labor required for each working surface and, therefore, the related costs.

In particular and advantageously, a triangle-shaped modeling head is used, preferably shaped as an equilateral triangle, which has three working surfaces; the head is rotating about an axis parallel to the plane of the vessel containing the resin, so that, as soon as a working surface is finished and the relative products have been made, the machine does not stop, but it is able to continue the production of additional objects or models (which can be put on hold) by using the other two working surfaces.

Moreover, the rotation of the head allows each working surfaces where the products are already made to be able to drain in a natural way the resin toward the vessel, through the grooves of the surface, since each surface, once completed the prototyping of products, rotates and places itself in an inclined position with respect to the surface of the vessel where the resin is contained.

It also follows that, after completion of said prototyping phase on the three working surfaces, the operator has the option to immediately remove the products from the respective surface, without having to wait for the final draining of the resin; this allows to further increase the production process of the products.

Finally, if the machine already works, it is however possible to plan the machining of other products on other working surfaces of the modeling head, with the consequence of being able to still decrease the processing time for the user.

Further characteristics and advantages of the invention will become clear from the description of a preferred embodiment of the stereolithographic machine according to the invention, which is showed in the enclosed drawings, in which:

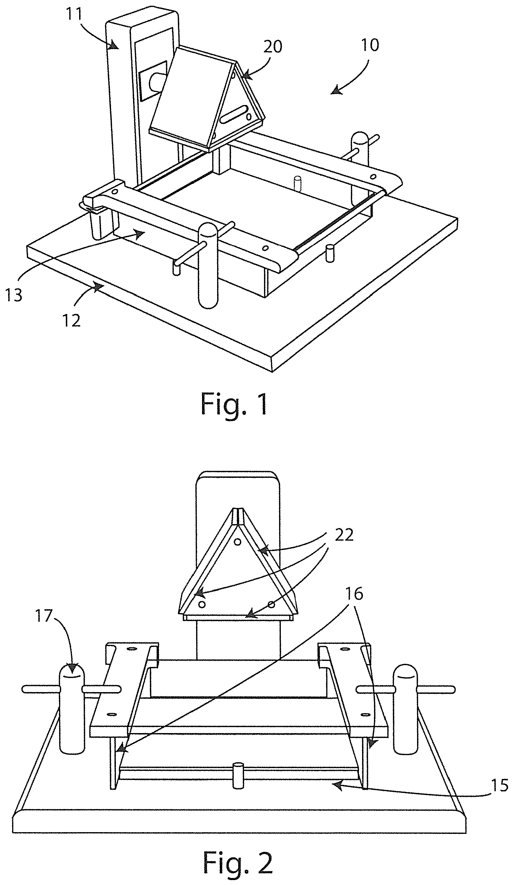

- figure 1 shows a perspective view of a stereolithographic machine according to the invention;
- figure 2 shows a front view of the machine of fig. 1;
- figure 3 is an enlarged detail of the vessel;
- figure 4 shows an enlarged detail of the working surfaces;
- figure 5 shows an enlarged detail of the modeling head;
- figure 6 shows a side view of the machine of fig.1.

With reference to the above figures, a stereolithographic machine is globally indicated with the reference number 10.

Still with reference to the figures, said stereolithographic machine 10 comprises a supporting frame 11 to which a support plate 12 is coupled and the plate 12 supports a vessel 13 which contains a fluid, typically a resin, or a powder.

Said vessel 13 comprises a bottom 15 delimited by side walls 16 and a stop unit 17 to stably retain the vessel 13 on the support plate 12 in a resting position.

There are also emitting means, placed superiorly, inferiorly or laterally to the vessel 13, which are able to direct an electromagnetic radiation towards the vessel 13 when said vessel 13 is placed in a stable position, so as to produce the selective solidification of the fluid or powder.

Preferably but not necessarily, said fluid is a photosensitive resin able to polymerize when stimulated by light radiation and the electromagnetic radiation is a laser light beam.

Obviously, alternative embodiments of the invention may provide for using other types of emission means, which are able to solidify the fluid or powder.

The stereolithographic machine 10 also comprises a modeling head 20 which supports a three-dimensional object 21 to be worked.

The stereolithographic machine 10 allows to produce the three-dimensional object 21 by means of superposition of a plurality of layers of a prefixed thickness of said resin or solidified powder.

In particular, the first layers adhere to a working surface 22 of the modeling head 20, while the subsequent layers adhere to the previous layers.

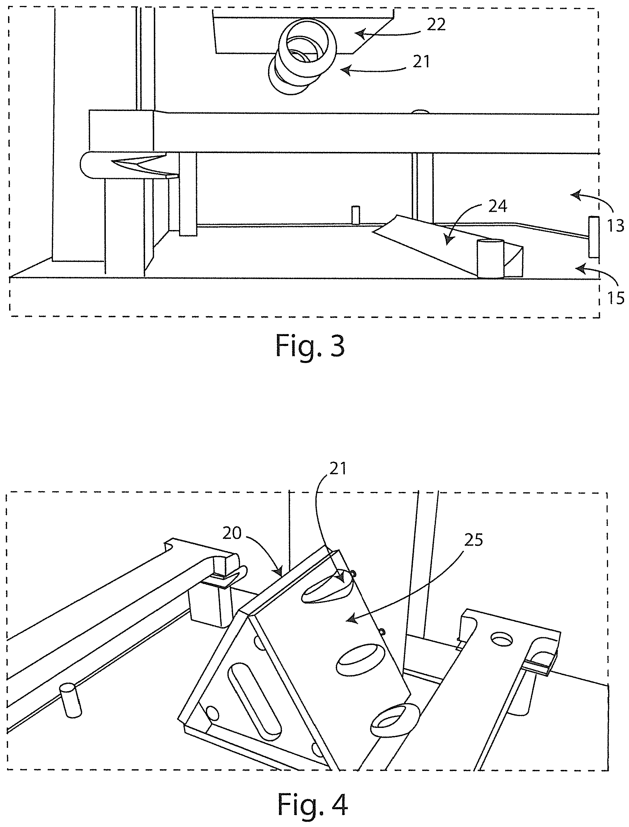

Preferably, but not necessarily, the stereolithographic machine 10 is able to stimulate the resin layer placed nearby the bottom 15 of the vessel 13, so as to make the three-dimensional object 21 below the modeling head 20, as shown in fig. 3.

In this case, the bottom 15 of the vessel 13 is transparent to the electromagnetic radiation and the support plate 12 has a through opening facing the bottom 15, at least when the vessel 13 is placed in said stable overlooking position, through which the electromagnetic radiation can reach the bottom 15.

Moreover, the modeling head 20 is coupled to the frame 11 through drive means 23, which are able to move the head 20 in a direction orthogonal to the plane of the support plate 12.

In order to make the first layer of the object 21, therefore, the head 20 is moved with the working surface 22 to the level of the fluid to be stimulated, so that the first layer is formed nearby said surface 22 and adheres to said surface 22.

The liquid resin adjacent to the bottom 15 of the vessel 13 is therefore selectively irradiated by means of the light source to solidify it.

In order to make each subsequent layer, the modeling head 20 is moved away from the bottom 15 of the vessel 13, so as to bring out the solidified layer from the resin and thus allow the restoring of the thickness of the liquid resin which is necessary for making another layer up to the complete formation of the object 21.

The modeling head 20, according to the invention, has several working surfaces 22 and, in particular, has three surfaces 22, which constitute the sides of a triangle, preferably an equilateral triangle, as in the preferred embodiment shown in the enclosed figures.

More generally and always in accordance with the invention, the modeling head 20 is constituted by a polyhedron.

In particular, the working surfaces 22 lie on different planes, preferably intersecting each other, and said surfaces 22 are interchangeable, because they can be removed by a respective coupled frame and therefore replaced when you need.

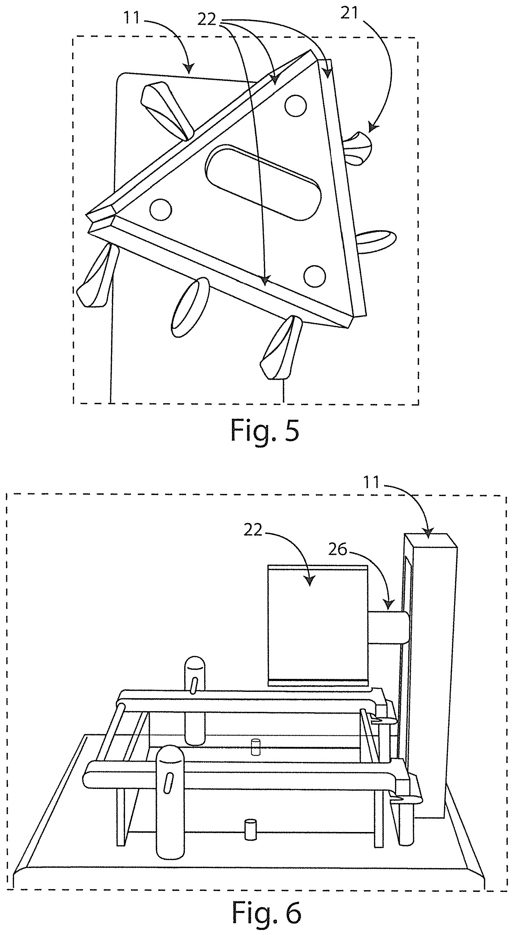

Said working surfaces 22 are alternately facing the emission means during processing and, to this end, the modeling head 20 has suitable means to its rotation around a horizontal axis 26, as shown in fig. 6.

According to the present invention, therefore, the modeling head 20 is composed of several working surfaces 22, preferably three surfaces 22, so as to enable the development of three-dimensional objects 21 on all the surfaces of said modeling head 20, advantageously decreasing the working times.

In a preferred embodiment, the working surfaces 22 have a plurality of grooves 25, which are provided along corresponding directions which are mutually parallel and preferably rectilinear, as shown in fig. 4.

During the formation of the first layers of the object 21 which are adjacent to the working surface 22 of the head 20, the fluid flowing in the grooves 25 is not achieved by the light stimulation and therefore is liquid, thus defining a series of channels interposed between the solidified object 21 and the modeling head 20.

The above mentioned grooves 25 allow to facilitate the detachment of the final object 21 from the working surface 22; moreover, since the object 21 is detached in its entirety, it leaves no solid residues within the grooves 25, also facilitating the cleaning of the head 20.

According to an embodiment of the present invention, the stereolithography machine 10 also comprises a spatula 24 which advantageously allows to further reduce the processing times, since it is not necessary that an operator cleans the side walls 16 and the bottom of the vessel 13.

In fact the spatula 24, by translating according to prefixed times inside the vessel 13, is able to clean the vessel 13, between one operating phase and the other of said three-dimensional objects 21 along the different working surfaces 22.

The use of said spatula 24 allows therefore to clean the surface between one operating phase and the other, so as to prevent that the resin is placed on the bottom of the vessel 13, thus preventing defects in the objects.

The invention thus conceived is susceptible of other modifications and variations. Moreover, all the details may be replaced with other technically equivalent elements. The materials, as well as the shapes and dimensions, may be different depending on the requirements and the state of the art.

Where the features and techniques mentioned in the following claims are followed by reference signs or numbers, such signs and reference numbers have been mentioned with the sole purpose of increasing the intelligibility of the claims and therefore they do not constitute in any way a limit for interpretating each element identified, by way purely of example, by said signs and reference numbers.

## Claims

1. A high productivity stereolithographic machine for making three-dimensional objects (21), comprising a vessel (13) which contains a fluid or powder, said fluid or powder being able to solidify through exposure to a defined radiation, means for emitting said radiation and at least one modeling head (20) having two or more working surfaces (22), which lie on respective different planes, **characterized in that** said modeling head (20) is shaped as a polyhedron.

2. A stereolithographic machine according to claim 1, **characterized in that** at least two of said planes are intersecting.

3. A stereolithographic machine according to claim 1, **characterized in that** said working surfaces (22) are interchangeable and removable from respective support frames.

4. A stereolithographic machine according to one of the previous claims, **characterized in that** said working surfaces (22) are three.

5. A stereolithographic machine according to one of the previous claims, **characterized in that** at least one of said working surfaces (22) is parallel to the surface of said vessel (13).

6. A stereolithographic machine according to one of the previous claims, **characterized in that** said machine comprises moving means configured to rotate said modeling head (20) about a horizontal axis which is parallel to said vessel (13).

7. A stereolithographic machine according to one of the previous claims, **characterized in that** said machine comprises means for moving said modeling head (20) according to a direction which is perpendicular with respect to said vessel (13).

8. A stereolithographic machine according to one of the previous claims, **characterized in that** said machine comprises a spatula (24), placed in a longitudinal direction with respect to said vessel (13) and configured to move inside the vessel (13) to clean said vessel (13).

9. A stereolithographic machine according to one of the previous claims, **characterized in that** each of said working surfaces (22) haa plurality of grooves (25), which are rectilinear and/or parallel to each other.

10. A stereolithographic machine according to one of the previous claims, **characterized in that** said modeling head (22) is shaped as a triangle, preferably an equilateral triangle, and **in that** said working surfaces (22) are arranged at respective sides of said triangle.

## Patentansprüche

1. Stereolithographische Maschine mit hoher Produktivität zur Herstellung von dreidimensionalen Objekten (21), umfassend ein Behälter (13), das ein Fluid oder ein Pulver enthält, wobei das Fluid oder das Pulver in der Lage sind, durch Belichtung mit einer definierten Strahlung zu verfestigen, Mittel zum Aussenden der Strahlung und mindestens einen Modellierkopf (20) mit zwei oder mehreren Arbeitsflächen (22), die auf jeweils unterschiedlichen Ebenen liegen, **dadurch gekennzeichnet, dass** der Modellierkopf (20) wie ein Polyeder geformt ist.

2. Stereolithographische Maschine nach Anspruch 1, **dadurch gekennzeichnet, dass** mindestens zwei der Ebenen sich schneiden.

3. Stereolithographische Maschine nach Anspruch 1, **dadurch gekennzeichnet, dass** die Arbeitsflächen (22) austauschbar und von jeweiligen Stützrahmen abnehmbar sind.

4. Stereolithographische Maschine nach einem der vorhergehenden Ansprüche, **dadurch gekennzeichnet, dass** die Arbeitsflächen (22) drei sind.

5. Stereolithographische Maschine nach einem der vorhergehenden Ansprüche, **dadurch gekennzeichnet, dass** mindestens eine der Arbeitsflächen (22) parallel zur Oberfläche des Behälters (13) ist.

6. Stereolithographische Maschine nach einem der vorhergehenden Ansprüche, **dadurch gekennzeichnet, dass** die Maschine ein Bewegungsmittel umfasst, das so konfiguriert ist, dass es den Modellierkopf (20) um eine horizontale Achse dreht, die parallel zum Behälter (13) ist.

7. Stereolithographische Maschine nach einem der vorhergehenden Ansprüche, **dadurch gekennzeichnet, dass** die Maschine Mittel zum Bewegen des Modellierkopfes (20) gemäss einer Richtung umfasst, die senkrecht zum Behälter (13) ist.

8. Stereolithographische Maschine nach einem der vorhergehenden Ansprüche, **dadurch gekennzeichnet, dass** die Maschine einen Spatel (24) umfasst, der in Längsrichtung in Bezug auf den Behälter (13) angeordnet ist und so konfiguriert ist, dass er sich innerhalb des Behälters (13) bewegt, um das Behälter zu reinigen (13) .

9. Stereolithographische Maschine nach einem der vorhergehenden Ansprüche, **dadurch gekennzeichnet, dass** jede der Arbeitsflächen (22) eine Vielzahl von Rillen (25) aufweist, die geradlinig und/oder parallel zueinander sind.

10. Stereolithographische Maschine nach einem der vorhergehenden Ansprüche, **dadurch gekennzeichnet, dass** der Modellierkopf (22) wie ein Dreieck, vorzugsweise ein gleichseitiges Dreieck, geformt ist und dass die Arbeitsflächen (22) an jeweiligen Seiten des Dreiecks angeordnet sind.

## Revendications

1. Machine de stéréolithographie présentant une productivité élevée servant à fabriquer des objets tridimensionnels (21), comprenant un récipient (13) contenant un fluide ou de la poudre, ledit fluide ou ladite poudre pouvant se solidifier suite à l'exposition à un rayonnement défini, des moyens servant à émettre ledit rayonnement et au moins une tête à modeler (20) comportant deux ou plusieurs surfaces d'appui (22) reposant sur des plans différents respectifs, **caractérisée en ce que** ladite tête à modeler (20) a la forme d'un polyèdre.

2. Machine de stéréolithographie selon la revendication 1, **caractérisée en ce qu'**au moins deux desdits plans se coupent.

3. Machine de stéréolithographie selon la revendication 1, **caractérisée en ce que** lesdites surfaces d'appui (22) sont interchangeables et amovibles à partir de châssis de support respectifs.

4. Machine de stéréolithographie selon l'une quelconque des revendications précédentes, **caractérisée en ce que** lesdites surfaces d'appui (22) sont au nombre de trois.

5. Machine de stéréolithographie selon l'une quelconque des revendications précédentes, **caractérisée en ce qu'**au moins une desdites surfaces d'appui (22) est parallèle à la surface dudit récipient (13).

6. Machine de stéréolithographie selon l'une quelconque des revendications précédentes, **caractérisée en ce que** ladite machine comprend des moyens de déplacement configurés pour faire tourner ladite tête à modeler (20) autour d'un axe horizontal étant parallèle au dit récipient (13).

7. Machine de stéréolithographie selon l'une quelconque des revendications précédentes, **caractérisée en ce que** ladite machine comprend des moyens servant à déplacer ladite tête à modeler (20) selon une direction étant perpendiculaire par rapport au dit récipient (13).

8. Machine de stéréolithographie selon l'une quelconque des revendications précédentes, **caractérisée en ce que** ladite machine comprend une spatule (24) placée dans une direction longitudinale par rapport au dit récipient (13) et configurée pour se déplacer à l'intérieur du récipient (13) pour nettoyer ledit récipient (13).

9. Machine de stéréolithographie selon l'une quelconque des revendications précédentes, **caractérisée en ce que** chacune des surfaces d'appui (22) comporte une pluralité de rainures (25) étant rectilignes et/ou parallèles réciproquement.

10. Machine de stéréolithographie selon l'une quelconque des revendications précédentes, **caractérisée en ce que** ladite tête à modeler (22) a la forme d'un triangle, de préférence un triangle équilatéral, et **en ce que** lesdites surfaces d'appui (22) sont disposées en correspondance des côtés respectifs dudit triangle.
